# EUROPEAN PATENT SPECIFICATION

(11) **EP 1 461 346 B1**
(45) Date of publication and mention of the grant of the patent: **13.04.2005**
(21) Application number: 02796655.5
(22) Date of filing: 17.12.2002
(51) Int. Cl.: C07F 17/00, C07F 7/08, C07F 7/00

(54) **PREPARATION OF DIALKYL-ANSA-METALLOCENES**
HERSTELLUNG VON DIALKYL-ANSA-METALLOCENEN
PREPARATION DE DIALKYL-ANSA-METALLOCENES

(30) Priority: 08.01.2002 DE 10200422
(43) Date of publication of application: 29.09.2004
(73) Proprietor: Basell Polyolefine GmbH, 50389 Wesseling (DE)
(72) Inventor: SCHOTTEK, Jörg, 60487 Frankfurt (DE); SCHAUER, Diana, 63486 Bruchköbel (DE)
(86) International application number: PCT/EP2002/014379
(87) International publication number: WO 2003/057704

(56) References cited:
- WO-A-00/31091
- US-A- 5 276 208
- PARK, J.T. ET ALL: "An efficient synthetic method of ansa-zirconocene dimethyl complexes via Me2ZrCl2" JOURNAL OF ORGANOMETALLIC CHEMISTRY, vol. 535, - 1997 pages 29-32, XP002233299 cited in the application

## Description

The present invention relates to a process for the racemoselective preparation of silicon-bridged dialkyl-ansa-metallocenes of the formula (I) and also to the use of a transition metal dialkyl compound of the formula (III) for the racemoselective preparation of these metallocenes.

The preparation of isotactic polypropylene (i-PP) is generally carried out using ansa-metallocenes in their racemic form. Metallocenes which have been found to give particularly good performance and are therefore industrially relevant are substituted silicon-bridged ansa-bisindenylzirconocene dichlorides as described in EP-B 0 485 821, EP-A 0 549 900 or EP-A 0 576 970.

The catalyst system used for the polymerization of olefins usually comprises at least one metallocene and at least one cocatalyst, for example a methylaluminoxane or a borate salt. When using a borate salt, for example [Ph₃C]⁺[B(C₆F₅)₄]⁻ or [HN(n-Bu)₃]⁺[B(C₆F₅)₄]⁻, as cocatalyst, the metallocenes are preferably used as dialkyl-metallocenes. The dialkyl-metallocenes have two alkyl radicals bound to the transition metal.

Processes for synthesizing dialkyl-metallocenes are known. In US patent 5,936,108, metallocene dichlorides such as zirconocene dichlorides are reacted with lithium alkyl compounds such as methyllithium, with the chloride ligands on the transition metal being replaced by alkyl radicals. In EP-A 0 682 036, monomethyl- and dimethyl-metallocenes are synthesized by reaction of the corresponding metallocene dichlorides with trimethylaiuminum in the presence of potassium fluoride.

In both processes, the previously synthesized metallocene dichloride is used as starting compound, so that the synthesis of racemic dimethyl-metallocenes requires the corresponding racemic metallocene dichlorides as starting compounds. However, the synthesis of the corresponding ansa-metallocene dichlorides usually gives them as a rac/meso mixture, so that the meso compound has to be separated off.

Journal of Organometallic Chemistry 535 (1997) 29-32 describes a process for the synthesis of variously bridged dimethyl-bisindenylzircocenes which bear hydrogen in each of the 2 positions of the two indenyl radicals. In this process, the doubly deprotonated bridged bisindenyl ligand is reacted with dimethylzirconium dichloride, which has to be handled at below -40°C. In the case of the synthesis of dimethylsilylbisindenyldimethylzirconium, which bears hydrogen atoms in the 2 positions on the two indenyl radicals, a meso-enriched product mixture was obtained, so that the meso product, which is here the main product, would have to be separated off to obtain the rac isomer.

For the abovementioned reasons, the known methods of preparing racemic silicon-bridged dialkyl-ansa-metallocenes leave something to be desired in respect of economics and ability to be readily implemented in industry.

It is an object of the present invention to find a process for preparing predominantly racemic silicon-bridged dialkyl-ansa-metallocenes which offers advantages both from an economic point of view and also in terms of ability to be implemented in industrial production:

We have found that this object is achieved by a process for the racemoselective preparation of silicon-bridged dialkyl-ansa-metatlocenes of the formula (I) 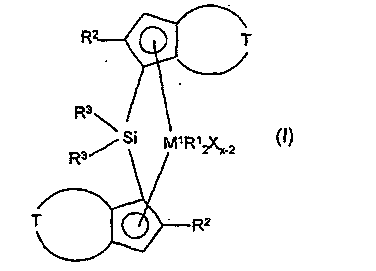 which comprises reacting a ligand starting compound of the formula (II) 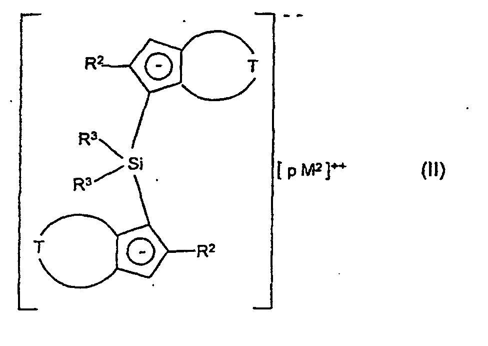 with a transition metal dialkyl compound of the formula (III)

M¹XₓR¹ ₂*D_{y} (III),

where
- M¹: is an element of group 4, 5 or 6 of the Periodic Table of the Elements,
- R¹: are identical C₁-C₂₀-alkyl or C₇-C₄₀-arylalkyl radicals,
- X: are identical or different halogens,
- R²: are identical or different C₁-C₄₀ radicals,
- R³: are identical or different C₁-C₄₀ radicals,
- T: is a divalent C₁-C₄₀ group which together with the cyclopentadienyl ring forms a further saturated or unsaturated ring system which has a ring size of from 5 to 12 atoms, where T may contain the heteroatoms Si, Ge, N, P, O or S in the ring system fused onto the cyclopentadienyl ring,
- M²: is Li, Na, K, MgCl, MgBr, Mgl, Mg or Ca,
- D: is an uncharged Lewis base ligand,
- x: is equal to the oxidation number of M¹ minus 2,
- y: is from 0 to 2
and
- p: is 1 in the case of doubly positively charged metal ions or 2 in the case of singly positively charged metal ions or metal ion fragments.

Furthermore, the use of the transition metal dialkyl compound of the formula (III) for the racemoselective preparation of silicon-bridged dialkyl-ansa-metallocenes of the formula (I) has been found.

M¹ is an element of group 3, 4, 5 or 6 of the Periodic Table of the Elements or of the lanthanides, for example titanium, zirconium, hafnium, vanadium, niobium, tantalum, chromium, molybdenum or tungsten, preferably titanium, zirconium or hafnium, particularly preferably zirconium or hafnium and very particularly preferably zirconium.

The radicals R¹ are identical and are each C₁-C₂₀-alkyl, preferably C₁-C₅-alkyl, or C₇-C₄₀-arylalkyl, preferably C₇-C₁₅-arylalkyl, where the aryl part contains from 6 to 10, preferably 6, carbon atoms and the alkyl part preferably contains 1 carbon atom and the aryl part may be substituted by further C₁-C₄-alkyl radicals. The radicals R¹ are particularly preferably methyl or benzyl, in particular methyl.

The radicals X are identical or different, preferably identical, and are each halogen, for example fluorine, chlorine, bromine or iodine, preferably chlorine.

The radicals R² are identical or different and are each a C₁-C₄₀ radical which is preferably bound via a carbon atom to the cyclopentadienyl ligand and may be branched in the α position or unbranched. R² is preferably a linear or branched C₁-C₂₀-alkyl radical, preferably a C₁-C₈-alkyl radical, particularly preferably a C₁-C₄-alkyl radical, or an arylalkyl radical having from 1 to 10, preferably from 1 to 4, carbon atoms in the alkyl part and from 6 to 22, preferably from 6 to 10, carbon atoms in the aryl part. Examples of very particularly preferred radicals R² are methyl, ethyl, n-propyl, isopropyl, n-butyl, i-butyl, n-pentyl, n-hexyl, benzyl and 2-phenylethyl.

Unless restricted further, alkyl is a linear, branched or cyclic radical such as methyl, ethyl, n-propyl, isopropyl, n-butyl, i-butyl, s-butyl, t-butyl, n-pentyl, cyclopentyl, n-hexyl, cyclohexyl, n-heptyl or n-octyl.

The radicals R³ are identical or different and are each a C₁-C₄₀ radical, for example a C₁-C₂₀-alkyl radical, preferably a C₁-C₄-alkyl radical, a C₂-C₂₀-alkenyl radical, preferably a C₂-C₄-alkenyl radical, a C₆-C₂₂-aryl radical, preferably a C₆-C₁₀-aryl radical, an alkylaryl or arylalkyl radical having from 1 to 10, preferably from 1 to 4, carbon atoms in the alkyl part and from 6 to 22, preferably from 6 to 10, carbon atoms in the aryl part, where the radicals may also be halogenated. Examples of particularly preferred radicals R³ are C₁-C₄-alkyl, in particular methyl or ethyl, and phenyl.

T is a divalent C₁-C₄₀ group which together with the cyclopentadienyl ring forms a further saturated or unsaturated ring system which has a ring size of from 5 to 12, preferably from 5 to 7, particularly preferably 5 or 6, atoms, where T may contain the heteroatoms Si, Ge, N, P, O or S, preferably N or S, in the ring system fused onto the cyclopentadienyl ring.

M² is preferably Li, MgCl, MgBr or Mg, in particular Li.

The uncharged Lewis base ligand D can, for example, be a linear, cyclic or branched oxygen-, sulfur-, nitrogen- or phosphorus-containing, preferably oxygen-containing, hydrocarbon. Preference is given to ethers and polyethers such as diethyl ether, dibutyl ether, tert-butyl methyl ether, anisole, triglyme, tetrahydrofuran and dioxane. Particular preference is given to 1,2-dimethoxyethane and tetrahydrofuran.

Particular preference is given to a process for the racemoselective preparation of silicon-bridged dialkyl-ansa-metallocenes of the formula (I),
in which
- T: is a 1,3-butadiene-1,4-diyl group which may be unsubstituted or be substituted by from 1 to 4 radicals R⁴, where the two 1,3-butadiene-1,4-diyl groups may be different,
- R⁴: are identical or different C₁-C₂₀ radicals,
- M¹: is titanium, zirconium or hafnium,
- R¹: are identical C₁-C₅-alkyl or C₇-C₂₀-arylalkyl radicals,
- X: is halogen and
R², R³, M², D, p, x and y are as defined above.

Preference is given to M¹ being zirconium and R¹ being methyl.

The 1,3-butadiene-1,4-diyl groups T are identical or different, preferably identical.

The radicals R⁴ on the substituted 1,3-butadiene-1,4-diyl groups T are identical or different, in particular identical, and are each a C₁-C₂₀ radical such as a C₁-C₄-alkyl radical or a substituted or unsubstituted C₆-C₄₀-aryl radical. The radicals R⁴ are particularly preferably substituted or unsubstituted C₆-C₄₀-aryl radicals having from 1 to 10, preferably from 1 to 4, carbon atoms in the alkyl part and from 6 to 22, preferably from 6 to 10, carbon atoms in the aryl part, where the radicals may also be halogenated. Examples of preferred radicals R⁴ are phenyl, 2-tolyl, 3-tolyl, 4-tolyl, 2,3-dimethylphenyl, 2,4-dimethylphenyl, 2,5-dimethylphenyl, 2,6-dimethylphenyl, 3,4-dimethylphenyl, 3,5-dimethylphenyl, 3,5-di(tert-butyl)phenyl, 2,4,6-trimethylphenyl, 2,3,4-trimethylphenyl, 1-naphthyl, 2-naphthyl, phenanthrenyl, p-isopropylphenyl, p-tert-butylphenyl, p-s-butylphenyl, p-cyclohexylphenyl and p-trimethylsilylphenyl.

The number of radicals R⁴ on the substituted 1,3-butadiene-1,4-diyl groups T is preferably 1 or 2, in particular 1.

The 1,3-butadiene-1,4-diyl group T together with the cyclopentadienyl radical forms an indenyl system which is, in particular, substituted in the 2,4 positions, 2,4,5 positions, 2,4,6 positions or 2,4,7 positions, where two substituents on the six-membered ring of the indenyl system may together be part of a further ring system, for example a further 1,3-butadiene-1,4-diyl group. The indenyl systems are very particularly preferably substituted in the 2,4 positions.

The substitution pattern indicated in the example of the process of the present invention is most preferred.

In the process of the present invention, the salt-like ligand starting compounds of the formula (II) are prepared either in isolated form in situ immediately before the reaction with the transition metal dialkyl compound of the formula (III).

To synthesize the salt-like ligand starting compounds of the formula (II), the corresponding uncharged silicon-bridged biscyclopentadienyl compound is doubly deprotonated by means of a strong base. Strong bases which can be used are, for example, organolithium or organomagnesium compounds such as methyllithium, n-butyllithium, sec-butyllithium, n-butyl-n-octylmagnesium or dibutylmagnesium.

The uncharged silicon-bridged biscyclopentadienyl compound to be deprotonated can once again be used in isolated form or without isolation directly from the bridging reaction of two cyclopentadienyl anions with an appropriate silicon reagent, for example a diorganodichlorosilane such as dimethyldichlorosilane. A further possible way of preparing the uncharged silicon-bridged biscyclopentadienyl compounds is a stepwise route. In this case, for example, a cyclopentadienyl anion. is reacted with an appropriate silicon reagent, for example a diorganodichlorosilane such as dimethyldichlorosilane, to form a monochloromonocyclopentadienyldiorganosilane compound and the chlorine in this is subsequently replaced by a further cyclopentadienyl group, which may be different from the first, to obtain the desired uncharged silicon-bridged biscyclopentadienyl compound.

The synthesis of the cyclopentadienyl anions can in principle be carried out under the same conditions as the deprotonation of the uncharged silicon-bridged biscyclopentadienyl compound.

The double deprotonation of the uncharged silicon-bridged biscyclopentadienyl compound to form the ligand starting compound of the formula (II) is usually carried out in the temperature range from -78°C to 110°C, preferably from 0°C to 80°C and particularly preferably from 20°C to 60°C.

Suitable inert solvents in which the deprotonation of the cyclopentadienyl derivatives by means of strong bases can be carried out are aliphatic or aromatic hydrocarbons such as benzene, toluene, xylene, mesitylene, ethylbenzene, cumene, decalin, tetralin, pentane, hexane, cyclohexane or heptane or ethers such as diethyl ether, di-n-butyl ether, tert-butyl methyl ether (MTBE), tetrahydrofuran (THF), 1,2-dimethoxyethane (DME), anisole, triglyme or dioxane and also any mixtures of these materials. Preference is given to solvents or solvent mixtures in which the subsequent process of the present invention for preparing the metallocene complexes of the formula (I) can likewise be carried out.

In an embodiment of the process of the present invention, the transition metal dialkyl compound of the formula (III) is produced at above -30°C, in particular above 0°C, by combining a compound M¹Xₓ₊₂ with from 2 to 2.5 equivalents of a compound R¹M³ in the presence of a ligand compound D, where
- M³: is Li⁺, Na⁺, K⁺, MgCl⁺, MgBr⁺, Mgl⁺, ½ [Mg⁺⁺] or ½ [Zn⁺⁺], and
the other variables are as defined above.

In another embodiment of the process of the present invention, the ligand starting compound of the formula (II) is combined with the transition metal dialkyl compound of the formula (III) at above -30°C, preferably above 0°C.

After the reaction components have been combined, the reaction mixture is preferably maintained at from 30°C to 150°C, in particular from 50°C to 80°C; for a period of at least 10 minutes, preferably from 1 to 8 hours.

In a further embodiment of the process of the present invention, the reaction is carried out in an organic solvent or solvent mixture which comprises at least 10% by volume, preferably at least 50% by volume, particularly preferably at least 80% by volume, very particularly preferably at least 90% by volume, of an ether, in particular a cyclic ether. An example of a very useful ether is tetrahydrofuran. Further inert solvents which may be present in the reaction solution are the abovementioned aliphatic or aromatic hydrocarbons or ethers in which the deprotonation of the ligand can be carried out.

In the process of the present invention, it is possible for not only the desired rac compounds of the formula (I) but also the corresponding meso compounds to be formed. In those cases in which the two cyclopentadienyl radicals on the silicon bridge are not identical, the compound does not exist in a meso form having Cₛ symmetry or rac form having C₂ symmetry, but instead there are only diastereomeric compounds having C, symmetry. In cases in which the two cyclopentadienyl radicals are identical but the two radicals R³ on the silicon bridge are not identical, the compound exists as a racemic diastereomer having C₁ symmetry and two different meso diastereomers having Cₛ symmetry. When used as catalyst components in the polymerization of propylene, these different diastereomeric metallocene compounds which differ from one another in the three-dimensional arrangement of the various substituents behave, solely on the basis of the three-dimensional arrangement of the two cyclopentadienyl ligands relative to one another, like the C₂-symmetric rac isomers (isotactic polypropylene) or like the Cₛ-symmetric meso isomer (atactic polypropylene) and can thus each be designated as a pseudo-rac form or a pseudo-meso form.

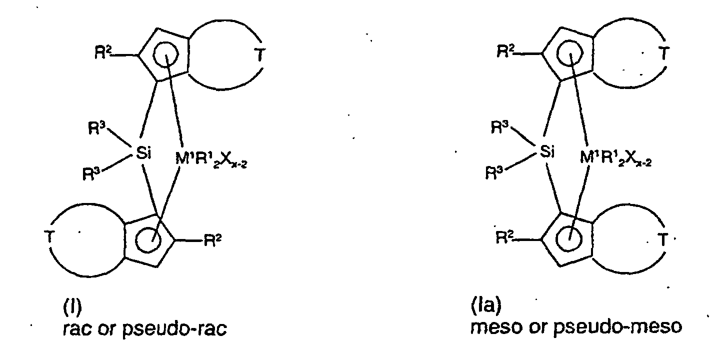

In the following, rac and pseudo-rac form and meso and pseudo-meso form will be differentiated only as rac form and meso form.

In a further embodiment of the process of the present invention, the racemoselectivity = (proportion of rac - proportion of meso)/(proportion of rac + proportion of meso) is greater than zero, preferably greater than 0.5.

The invention further provides for the use of the transition metal dialkyl compound of the formula (III) for the racemoselective preparation of silicon-bridged dialkyl-ansa-metallocenes of the formula (I) as described above.

Illustrative but nonlimiting examples of metallocenes of the formula (I) are:
dimethylsilanediylbis(2-methyl-4-phenylindenyl)dimethylzirconium,
dimethylsilanediylbis(2-methyl-4,5-benzoindenyl)dimethylzirconium,
dimethylsilanediylbis(2-methyl-4-(4'-tert-butylphenyl)indenyl)dimethylzirconium,
dimethyisilanediylbis(2-ethyl-4-(4'-tert-butylphenyl)indenyl)dimethylzirconium,
dimethylsilanediylbis(2-n-propyl-4-(4'-tert-butylphenyl)indenyl)dimethylzirconium,
dimethylsilanediyl(2-methyl-4-(4'-tert-butylphenyl)indenyl)(2-isopropyl-4-(4'-tert-butylphenyl)indenyl)dimethylzirconium,
dimethylsilanediyl(2-ethyl-4-(4'-tert-butylphenyl)indenyl)(2-isopropyl-4-(4'-tert-butylphenyl)indenyl)dimethylzirconium,
dimethylsilanediyl(2-methyl-4-phenylindenyl)(2-isopropyl-4-(4'-tert-butylphenyl)indenyl)dimethylzirconium,
dimethylsilanediyl(2-isopropyl-4-(4'-tert-butylphenyl)-1-indenyl)(2,7-dimethyl-4-(4'-tert-butylphenyl)indenyl)dimethylzirconium,
dimethylsilanediyl(2-isopropyl-4-(4'-tert-butylphenyl)-1-indenyl)(2-ethyl-7-methyl-4-(4'-tert-butylphenyl)indenyl)dimethylzirconium.

The salts of the formula M²X or M²X₂, for example lithium chloride or magnesium chloride, which are obtained as coproduct in the process of the present invention for preparing racemic silicon-bridged dialkyl-ansa-metallocenes of the formula (I) can be separated off from the metallocene by known methods. For example, a salt such as lithium chloride can be precipitated by means of a suitable solvent in which the metallocene, however, is soluble, so that the solid lithium chloride is separated off from the dissolved metallocene by means of a filtration step. The metallocene can also be separated off from the salt by extraction with a suitable solvent of this type. Any such filtration steps can also be carried out using filter aids such as kieselguhr. For example, organic solvents, in particular organic aprotic, oxygen-free solvents such as toluene, ethylbenzene, xylenes or methylene chloride, can be used for such a filtration or extraction step. If necessary, the solvent components in which the salt is at least partly soluble are removed to a substantial extent before the salt is separated off as described above. For example, lithium chloride is appreciably soluble in tetrahydrofuran.

The racemic silicon-bridged dialkyl-ansa-metallocenes of the formula (I) prepared by the process of the present invention are used as catalyst constituents together with suitable cocatalysts and, if appropriate, suitable support materials in the catalyst systems for the homopolymerization or copolymerization of α-olefins.

### Examples:

### General

All experiments using organometallic compounds were carried out in baked glass vessels and under a protective argon atmosphere.

### 1 Synthesis of Me₂Si(2-Me-4-Phlnd)₂ZrMe₂

### 1a Synthesis of dimethylzirconium dichloride (1)

356 ml of THF were placed in a reaction vessel at 0°C and 4.97 g of zirconium tetrachloride (21.3 mmol) were added. At 0°, 47 ml of 1M methyllithium solution in cumene/THF (47 mmol = 2.2 eq) were added dropwise over a period of 8 minutes. The yellow solution was subsequently stirred for another 30 minutes at 0°C.

### 1b Synthesis of Me₂Si(2-Me-4-Phlnd)₂ZrMe₂ (2)

10 g of dimethylbis(2-methyl-4-phenyl-1-indenyl)silane (21.3 mmol) were dissolved in 236 ml of THF, cooled to 0°C and 18.8 ml of butyllithium solution (2.5 molar in toluene, corresponding to 47 mmol = 2.2 eq) were added dropwise over a period of 4 minutes. The cold bath was removed and the reaction mixture was stirred for another 25 minutes (T = 15°C). The reddish brown reaction mixture was added at 0°C to the solution of dimethylzirconium dichloride prepared in Experiment 1a over a period of 15 minutes and the resulting mixture was subsequently heated to 65°C.
After 4.5 hours at 65°C, about 90% of the solvent (596 ml) were distilled from the brown suspension. The proton NMR of a sample of the crude product indicated a rac/meso ratio of 3 : 1. 375 ml of toluene were subsequently added to the crude product suspension and the suspension was stirred at 60°C for 30 minutes, filtered through a G3 protective gas frit and the residue was washed once with 50 ml of warm toluene (60°C).
The filtrate was evaporated to about ¼ of its volume (125 ml) and the solid formed was filtered off via a G3 protective gas frit. The yellowish green residue was washed twice with 3 ml of toluene and dried in an oil pump vacuum.
Yield: 3.86 g of (2) as a yellow solid; pure rac isomer according to proton NMR (corresponds to 31 % of the theoretical yield)

## Claims

1. A process for the racemoselective preparation of silicon-bridged dialkyl-ansa-metallocenes of the formula (I) 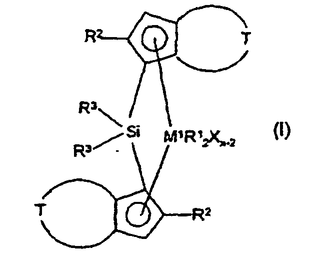 which comprises reacting a ligand starting compound of the formula (II) 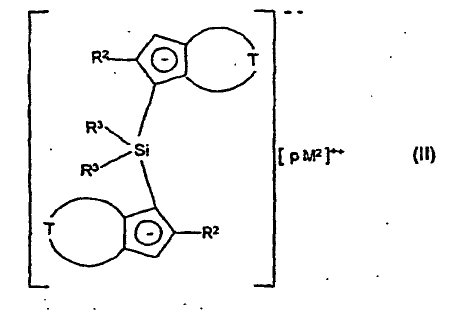 with a transition metal dialkyl compound of the formula (III)
M¹XₓR¹ ₂*D_{y} (III),
where
M¹ is an element of group 4, 5 or 6 of the Periodic Table of the Elements,
R¹ are identical C₁-C₂₀-alkyl or C₇-C₄₀-arylalkyl radicals,
X are identical or different halogens,
R² are identical or different C₁-C₄₀ radicals,
R³ are identical or different C₁-C₄₀ radicals,
T is a divalent C₁-C₄₀ group which together with the cyclopentadienyl ring forms a further saturated or unsaturated ring system which has a ring size of from 5 to 12 atoms, Where T may contain the heteroatoms Si, Ge, N, P, O or S in the ring system fused onto the cyclopentadienyl ring,
M² is U, Na, K, MgCl, MgBr, Mgl, Mg or Ca,
D is an uncharged Lewis base ligand,
x is equal to the oxidation number of M¹ minus 2,
y is from 0 to 2
and
p is 1 in the case of doubly positively charged metal ions or 2 in the case of singly positively charged metal ions or metal ion fragments,
wherein the racemoselectivity = (proportion of rac - proportion of meso)/(proportion of rac + proportion of meso) is greater than zero.

2. A process as claimed in claim 1, wherein
T is a 1,3-butadiene-1,4-diyl group which may be unsubstituted or be substituted by from 1 to 4 radicals R⁴, where the two 1,3-butadiene-1,4-diyl groups may be different,
R⁴ are identical or different C₁-C₂₀ radicals,
M¹ is titanium, zirconium or hafnium,
R¹ are identical C₁-C₅-alkyl or C₇-C₂₀-arylalkyl radicals.
X is halogen and
R², R³, M², D, p, x and y are as defined in claim 1.

3. A process as claimed in claim 1 or 2, wherein the transition metal dialkyl compound of the formula (III) is produced at above -30°C by combining a compound M¹Xₓ₊₂ with from 2 to 2.5 equivalents of a compound R¹M³ in the presence of a ligand compound D, where
M³ is Li⁺, Na⁺, K⁺, MgCl⁺, MgBr⁺, Mgl⁺, ½ [Mg⁺⁺] or ½ [Zn⁺⁺], and
the other variables are as defined in claim 1 or 2.

4. A process as daimed in claim 1 or 2, wherein the ligand starting compound of the formula (II) is combined with the transition metal dialkyl compound of the formula (III) at above -30°C.

5. A process as claimed in claim 4, wherein the reaction mixture is maintained at from 30°C to 150°C for a period of at least 10 minutes after the reaction components have been combined.

6. A process as claimed in any of claims 1 to 5, wherein the reaction is carried out in an organic solvent or solvent mixture which comprises at least 10% by volume of an ether.

7. The use of a transition metal dialkyl compound of the formula (III) as defined in claim 1 for the racemoselective preparation of silicon-bridged dialkyl-ansa-metallocenes of the formula (I) as defined in claim 1.

## Patentansprüche

1. Verfahren zur racemoselektiven Herstellung von siliziumverbrückten Dialkyl-ansa-Metallocenen der Formel (I) 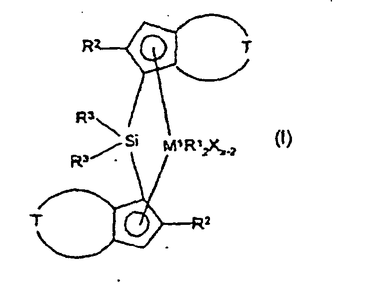 **dadurch gekennzeichnet, dass** eine Ligandausgangsverbindung der Formel (II) 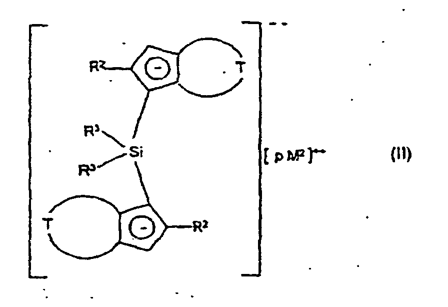 mit einer Übergangsmetall-dialkylverbindung der Formel (III)
M¹XₓR¹ ₂*D_{y} (III),
umgesetzt wird,
worin
M¹ ein Element der 4., 5. oder 6. Gruppe des Periodensystems der Elemente ist,
R¹ gleiche C₁-C₂₀-Alkyl- oder C₇-C₄₀-Arylalkyl-Reste sind,
X gleiche oder verschiedene Halogene sind,
R² gleiche oder verschiedene C₁-C₄₀-kohlenstoffhaltige Reste sind,
R³ gleiche oder verschiedene C₁-C₄₀-kohlenstoffhaltige Reste sind,
T eine zweibindige C₁-C₄₀-kohlenstoffhaltige Gruppe darstellt, die zusammen mit dem Cyclopentadienylring ein weiteres gesättigtes oder ungesättigtes Ringsystem bildet, welches eine Ringgröße von 5 bis 12 Atomen aufweist, wobei T innerhalb des mit dem Cyclopentadienylring anellierten Ringsystems die Heteroatome Si, Ge, N, P, O oder S enthalten kann,
M² Li, Na, K, MgCl, MgBr, Mgl, Mg oder Ca ist,
D ein neutraler lewisbasischer Ligand ist,
x gleich der Oxidationszahl von M' minus 2 ist,
y eine Zahl zwischen 0 und 2 ist
und
p gleich 1 für zweifach positiv geladene Metallionen oder 2 für einfach positiv geladene Metallionen oder Metallionenfragmente ist,
**dadurch gekennzeichnet, dass** die Racemoselektivität = (rac-Anteil - meso-Anteil)/ (rac-Anteil + meso-Anteil) größer als Null ist.

2. Verfahren gemäß Anspruch 1, **dadurch gekennzeichnet, dass**
T eine unsubstituierte oder eine mit 1 bis 4 Resten R⁴ substituierte 1,3-Butadien-1,4-diylgruppe ist, wobei die beiden 1,3-Butadien-1,4-diylgruppen auch unterschiedliche Bedeutung haben können,
R⁴ gleiche oder verschiedene C₁-C₂₀-kohlenstoffhaltige Reste sind,
M¹ gleich Titan, Zirkonium oder Hafnium ist,
R¹ gleiche C₁-C₅-Alkyl- oder C₇-C₂₀-Arylalkyl-Reste sind,
X Halogen bedeutet und
R², R³, M², D, p, x und y wie in Anspruch 1 definiert sind.

3. Verfahren gemäß Anspruch 1 oder 2, **dadurch gekennzeichnet, dass** die Übergangsmetalldialkylverbindung der Formel (III) bei einer Temperatur oberhalb von -30°C durch Zusammengabe einer Verbindung M¹Xₓ₊₂ mit 2 bis 2,5 Äquivalenten einer Verbindung R¹M³ in Gegenwart einer Ligandverbindung D erzeugt wird, wobei
M³ Li⁺, Na⁺, K⁺, MgCl⁺, MgBr⁺, Mgl⁺, ½ [Mg⁺⁺] oder ½ [Zn⁺⁺] ist, und
die übrigen Variablen wie in Anspruch 1 oder 2 definiert sind.

4. Verfahren gemäß Anspruch 1 oder 2, **dadurch gekennzeichnet, dass** die Ligandausgangsverbindung der Formel (II) bei einer Temperatur oberhalb von -30°C mit der Übergangsmetalldialkylverbindung der Formel (III) zusammen gegeben wird.

5. Verfahren gemäß Anspruch 4, **dadurch gekennzeichnet, dass** nach der Zusammengabe der Reaktionskomponenten das Reaktionsgemisch für einen Zeitraum von mindestens 10 min bei einer Temperatur von 30°C bis 150°C gehalten wird.

6. Verfahren gemäß einem der Ansprüche 1 bis 5, **dadurch gekennzeichnet, dass** die Reaktion in einem organischen Lösungsmittel oder Lösungsmittelgemisch durchgeführt wird, das mindestens 10 Volumen-% eines Ethers enthält.

7. Verwendung der Übergangsmetalldialkylverbindung der Formel (III) wie in Anspruch 1 definiert zur racemoselektiven Herstellung von siliziumverbrückten Dialkyl-ansa-Metallocenen der Formel (I) wie in Anspruch 1 definiert.

## Revendications

1. Procédé pour la préparation racémo-sélective de dialkyl-ansa-métallocènes à pont silicium de formule (I) 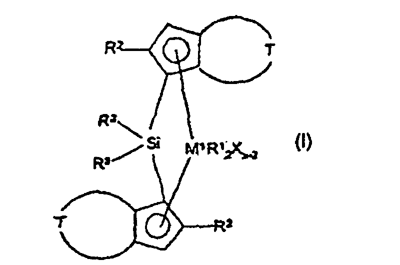 qui comprend la réaction d'un composé de départ ligand de formule (II) 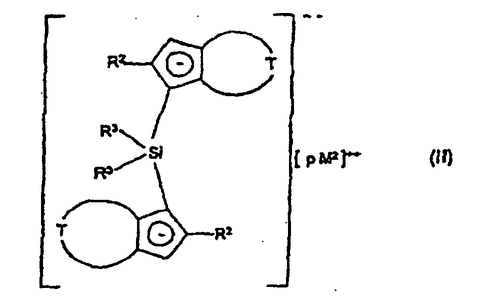 avec un composé dialkyle d'un métal de transition de formule (III)
M¹XₓR¹ ₂⁻D_{y} (III)
où
M¹ est un élément du groupe 4, 5 ou 6 du tableau périodique des éléments,
R¹ sont des radicaux alkyle en C₁ à C₂₀ ou arylalkyle C₇ à C₄₀ identiques,
X sont des halogènes identiques ou différents,
R² sont des radicaux en C₁ à C₄₀ identiques ou différents,
R³ sont des radicaux en C₁ à C₄₀ identiques ou différents,
T est un groupe en C₁ à C₄₀ divalent, qui avec le cycle cyclopentadiényle forme un autre système cyclique saturé ou insaturé qui a une taille de cycle de 5 à 12 atomes, où T peut contenir les hétéroatomes Si, Ge, N, P, O ou S dans le système cyclique condensé sur le cycle cyclopentadiényle,
M² est Li, Na, K, MgCl, MgBr, Mgl, Mg ou Ca,
D est un ligand de base de Lewis non chargé,
x est égal au nombre d'oxydations de M¹ moins 2,
y est de 0 à 2
et
p est 1 dans le cas d'ions métalliques doublement chargé positivement et 2 dans le cas des ions à une seule charge positive ou de fragments d'ions métalliques,
dans lequel la racémo-sélectivité = (proportion de rac - proportion de méso)/(proportion de rac + proportion de méso) est supérieure à zéro.

2. Processus tel que revendiqué dans la revendication 1, dans lequel
T est un groupe 1,3-butadiène-1,4-diyle qui peut ne pas être substitué ou être substitué par de 1 à 4 radicaux R⁴, où les deux groupes 1,3-butadiène-1,4-diyle peuvent être différents,
R⁴ sont des radicaux en C₁ à C₂₀ identiques ou différents,
M¹ est le titane, le zircon ou l'hafnium,
R¹ sont de radicaux alkyle en C₁ à C₅ ou arylakyle en C₇ à C₂₀ identique,
X est un halogène et
R², R³, M², D, p, x et y sont tels que définis dans la revendication 1.

3. Processus tel que revendiqué dans la revendication 1 ou 2, dans lequel le composé dialkyle de métal de transition de formule (III) est produit à une température supérieure à - 30°C en combinant un composé M¹Xₓ₊₂ avec de 2 à 2,5 équivalents d'un composé R¹M³ en présence d'un composé ligand D, où
M³ est Li⁺, Na⁺, K⁺, MgCl⁺, MgBr⁺, Mgl⁺, ½[Mg⁺⁺] ou ½[Zn⁺⁺], et les autres variables sont telles que définis dans la revendication 1 ou 2.

4. Processus tel que revendiqué dans la revendication 1 ou 2, dans lequel le composé de départ ligand de formule (II) est combiné au composé dialkyle de métal de transition de formule (III) à une température supérieure à - 30 °C.

5. Processus tel que revendiqué dans la revendication 4, dans lequel le mélange réactionnel est maintenu de 30°C à 150°C pour une période d'au moins 10 minutes après avoir combiné les composants de la réaction.

6. Processus tel que revendiqué dans l'une quelconque des revendications 1 à 5, dans lequel la réaction est réalisée dans un solvant organique ou dans un mélange de solvant qui comprend au moins 10 % en volume d'un éther.

7. Utilisation d'un composé dialkyle de métal de transition de formule (III) tel que défini dans la revendication 1 pour la préparation racémo-sélective de dialkyl-ansa-métallocènes à pont silicium de formule (I) tel que défini dans la revendication 1.
